# EUROPÄISCHE PATENTANMELDUNG

(11) **EP 0 555 529 A1**
(43) Veröffentlichungstag der Anmeldung: **18.08.1993**
(21) Anmeldenummer: 92119112.8
(22) Anmeldetag: 07.11.1992
(51) Int. Cl.: B60J 10/12

(54) **Fahrzeug-Sonnendach**

(30) Priorität: 10.02.1992 DE 4203806
(71) Anmelder: NOLDEN KAROSSERIE GmbH, D-50739 Köln (DE)
(72) Erfinder: Nolden, Oliver, W-5000 Köln 30 (DE)
(74) Vertreter: Oppermann, Ewald, Dipl.-Ing.

(57) **Zusammenfassung**

Bei einem Sonnendach mit durch Längsrippen (20) profiliertem festen Dachblech und einem in einer Dachöffnung befestigten mehrteiligen Rahmen (2), welcher einen Deckel (1) dicht schließend, aber bei Öffnung verlagerbar aufnimmt, sind die Längsrippen (20) im Bereich der Querränder der Dachöffnung in bestimmter Weise ausgeschnitten, um einen Befestigungsangriff des Rahmens (2) an die Querränder der Dachöffnung zu ermöglichen. Eine zwischen dem Rahmen (2) und dem Dachblech eingelegte Dichtung (15) dichtet die Dachöffnung ab und schließt die zur Dachöffnung hin gerichteten stirnseitigen Öffnungen der Längsrippen (20).

## Beschreibung

Die Erfindung bezieht sich auf ein in das feste Dachblech eines Fahrzeugs eingebautes Sonnendach entsprechend dem Oberbegriff des Patentanspruchs 1.

Derartige Sonnendächer werden häufig (aber nicht ausschließlich) in nachträglichem Einbau an den Dachblechen von Fahrzeugen, insbesondere von Personenkraftwagen, montiert. Zweckmäßigerweise sind diese Sonnendächer im vorderen Bereich des Dachblechs zum bequemen Betätigen durch Fahrer oder Beifahrer angeordnet. Bei Fahrzeugen mit mehreren Sitzreihen können auch mehrere Sonnendächer in Längsrichtung über das Dachblech verteilt angeordnet sein. Zum Zwecke der Be- und Entlüftung kann der beispielsweise als Glasplatte ausgebildete Deckel gegenüber dem Rahmen so verlagerbar sein, daß er um eine vordere Scharnierung mit seiner Hinterkante durch Ausstellvorrichtungen angehoben oder zur zumindest teilweisen Freilegung der Dachöffnung nach dem Anheben seiner Hinterkante an seitlichen Führungen geführt über den hinteren Bereich des festen Dachblechs geschoben werden kann.

Bei glattflächigen Dachblechen, selbst wenn diese Wölbungen in Quer- und/oder Längsrichtung aufweisen, bereitet der Einbau derartiger Sonnendächer mit einer gattungsgemäßen Anordnung (EP 0 396 006 A1) in der Regel keine Schwierigkeiten. Hierbei läßt sich der mehrteilige Rahmen, der in seinen Querteilen und Längsteilen etwaigen Wölbungen des Dachblechs angepaßt ist, ohne weiteres in der zuvor angebrachten, etwa rechteckigen Dachöffnung abgedichtet anbringen. Besitzt das Fahrzeug jedoch der Versteifung des Dachblechs dienende, daraus nach oben vorspringende Längsrippen oder -sicken, so kann der obere Einfaßrahmen mit seinen Querteilen der Oberfläche des Dachblechs nicht unterbrechungslos aufliegen. Dadurch ist die Abdichtung des Rahmens gegenüber dem Dachblech erschwert, weil die Rahmenquerteile den Rippen oder Sicken aufsitzen. Diese für die Anbringung eines Sonnendachs ungünstige Situation kann vor und/oder hinter der Dachöffnung gegeben sein, während die Auflage und Abdichtung der Rahmenseitenteile selbst dann keine besonderen Schwierigkeiten bereitet, wenn auch seitlich neben der Dachöffnung in Längsrichtung durchgehende Rippen oder Sicken vorhanden sind, weil hierfür die seitlichen Dachöffnungsränder jedenfalls in Bereichen angebracht werden können, die sich durchgehend in der Ebene des Dachblechs befinden. Ein Zurückdrücken der Rippen auf das allgemeine Niveau der Oberfläche des festen Dachblechs im kritischen Bereich der Querränder der Dachöffnung ist nicht möglich, weil dadurch unerwünschte störende Deformationen des Dachblechs erzeugt würden.

Der Erfindung liegt die Aufgabe zugrunde, in einem mit Längsrippen versehenen Dachblech eines Fahrzeugs ein Sonnendach auszubilden, dessen Rahmenteile trotz der Rippen allseits dem festen Dachblech glattflächig und abgedichtet anliegen.

Die gestellte Aufgabe wird durch die kennzeichnenden Merkmale des Patentanspruchs 1 gelöst. Vorteilhafte Weiterbildungen ergeben sich aus den Unteransprüchen.

Die Ausbildung des erfindungsgemäßen Sonnendachs beschränkt sich nicht auf die Anbringung einer etwa rechteckigen und ggf. an den Ecken gerundeten Dachöffnung im Dachblech, sondern sieht darüber hinaus an den Querrändern der Dachöffnung die Vornahme von definierten Ausschnitten in den zunächst bis zur Dachöffnung reichenden Längsrippen vor, die von der Dichtung und dem Rahmen überbrückt sind, wobei die Dichtung zugleich die stirnseitigen Öffnungen der Rippen schließt und den Randflächen der Rippen dicht von oben anliegt.

Die Ausschnitte in den Längsrippen sind erfindungsgemäß so gebildet, daß die zwischen den Rippen in der Ebene bzw. dem allgemeinen Wölbungsverlauf des Dachblechs befindlichen Blechstreifen als bis zu den Querrändern der Dachöffnung durchlaufende Zungen erhalten geblieben sind, welche den Querrändern eine gezackte Konfiguration vermitteln, bei der Zungen und die zur Dachöffnung hin offenen Ausschnitte abwechselnd angeordnet sind. Diese Zungen werden von oben und unten durch den Einfaßrahmen bzw. den Gegenrahmen umgriffen und dienen der Befestigung des Rahmens an den Querrändern der Dachöffnung.

Die Ausschnitte in den Längsrippen bzw. den Querrändern der Dachöffnung sind jeweils zu beiden Seiten durch Zungen und in Querrichtung durch die stirnseitigen Schnittflächen der Längsrippen begrenzt. Diese Schnittflächen können entsprechend Anspruch 2 oder alternativ entsprechend Anspruch 3 ausgerichtet sein.

Zweckmäßig sind die Ausschnitte zur Anpassung an die Auflagebreite des mehrteiligen Rahmens wie im Anspruch 4 angegeben ausgebildet.

In den Ansprüchen 5 bis 7 sind drei unterschiedliche Ausbildungsvarianten für die Dichtung angegeben, durch die jeweils sichergestellt ist, daß die Dichtung den Rahmen gegenüber den Dachöffnungsrändern auch im Bereich der mit den Ausschnitten versehenen Querränder im Formschluß mit dem durch die Längsrippen profilierten Dachblech abdichtet und zugleich die durch die Ausschnitte gebildeten offenen Stirnseiten der Längsrippen verschließt.

Die Erfindung wird in Ausführungsbeispielen nachfolgend anhand der Zeichnungen näher erläutert. Darin zeigt:
- Fig. 1: eine abgebrochene Längsschnittansicht des hinteren Bereichs eines als Hebedach ausgebildeten Sonnendachs,
- Fig. 2: die abgebrochene Draufsicht auf ein mit Längsrippen profiliertes Dachblech im Bereich eines gezackten Querrands der Dachöffnung,
- Fig. 3: die abgebrochene Draufsicht auf eine Ecke der Dachöffnung mit an den Dachöffnungsrändern angebrachter Dichtung,
- Fig. 4: den abgebrochenen Schnitt entlang der Linie IV-IV in Fig. 3,
- Fig. 5: den der Fig. 4 ähnlichen Schnitt durch eine andere Ausführungsform,
- Fig. 6: die der Fig. 2 ähnliche Draufsicht auf die Ausführungsform gemäß Fig. 5 und

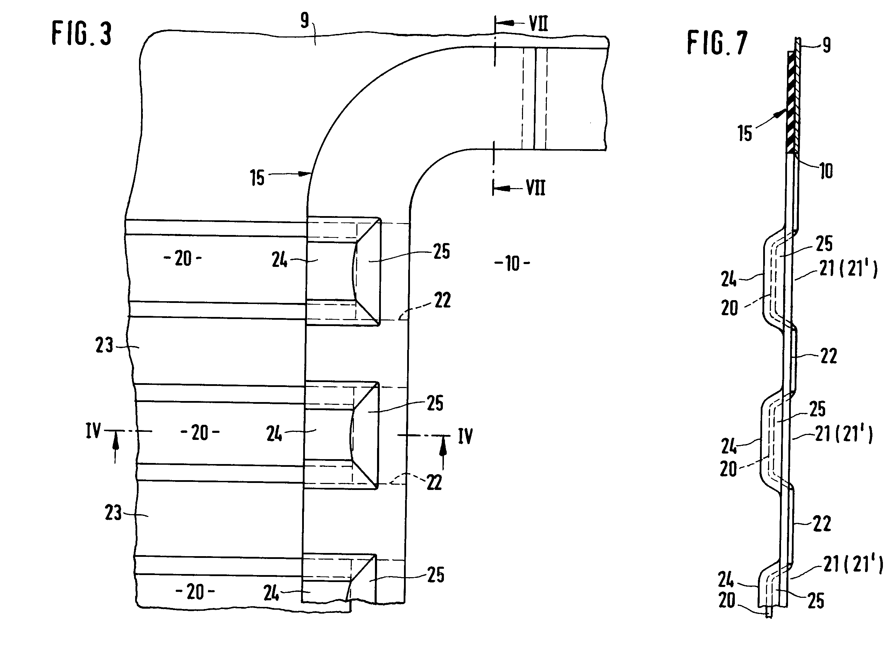

- Fig. 7: die Schnittansicht entlang der Linie VII-VII in Fig. 3.

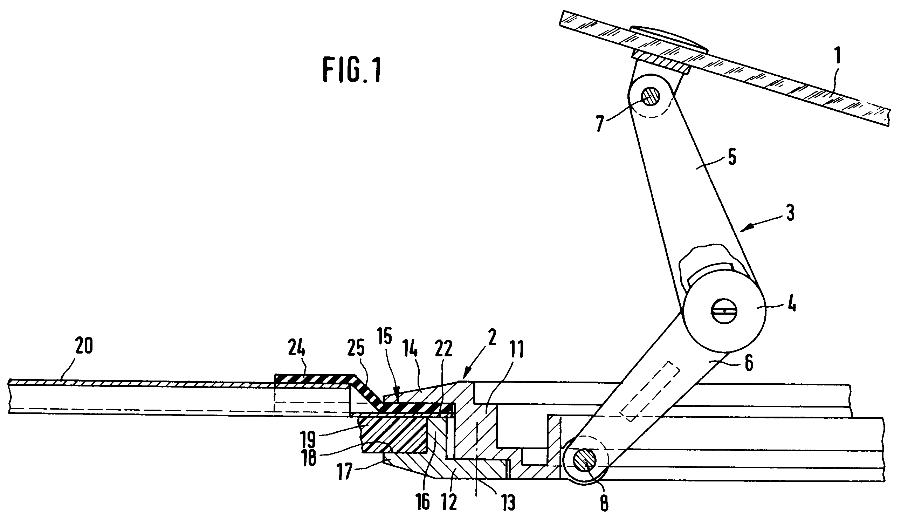

In Fig. 1 ist ein Sonnendach mit einem als Glasplatte ausgebildeten Deckel 1 dargestellt, der sich innerhalb eines Rahmens 2 befindet, in der Nähe seiner Vorderkante scharnierartig mit dem Rahmen verbunden ist (nicht dargestellt) und in der Nähe seiner Hinterkante über eine Ausstellvorrichtung 3 mit dem Rahmen 2 verbunden ist. Die Ausstellvorrichtung 3 erlaubt die in Fig. 1 dargestellte Be- und Entlüftungsstellung des Deckels 1 und besteht im wesentlichen aus zwei über ein Kniegelenk 4 miteinander verbundenen Hebeln 5 und 6, von denen der Hebel 5 über einen Schwenkzapfen 7 mit dem Deckel 1 und der Hebel 6 über einen Schwenkzapfen 8 mit dem Rahmen 2 verbunden ist. Die am Rahmen 2 umlaufend anzuordnende Randspaltabdichtung zur Abdichtung des Deckels 1 in seiner Schließlage ist nicht dargestellt. Der Deckel 1 und seine Ausstellvorrichtung 3 sind nicht Gegenstand der Erfindung und werden daher nicht näher dargestellt und beschrieben. Selbstverständlich kann der Deckel 1 auch durch entsprechend ausgebildete, zwischen ihm und dem Rahmen wirksame Funktionsmittel zusätzlich gegenüber dem Rahmen 2 nach Art eines Oberfirstschiebedachs verschiebbar angeordnet sein. Der Deckel kann auch vollständig abnehmbar angeordnet sein. Der Rahmen 2 ist zur Zeichnungsvereinfachung lediglich in Fig. 1 dargestellt, besitzt jedoch eine umlaufend gleichbleibende oder ähnliche Profilierung.

Das Sonnendach ist in einem festen Dachblech 9 innerhalb einer darin angebrachten Dachöffnung 10 (Fig. 3) angeordnet. Der die Dachöffnung 10 umgebende Rahmen 2 besteht aus einem von oben in die Dachöffnung 10 eingesetzten Einfaßrahmen 11 und einem unteren Gegenrahmen 12. Bei der Montage werden die beiden Rahmen 11 und 12 fest miteinander verbunden, beispielsweise bei 13 durch Schrauben. In montierter Anordnung umgreift der mehrteilige Rahmen 2 umlaufend die Ränder der Dachöffnung 10, wie das für den hinteren Querrand der Dachöffnung in Fig. 1 dargestellt ist. Der Einfaßrahmen 11 liegt mit einem sich von der Dachöffnung 10 auswärts erstreckenden Flansch 14 einer Dichtung 15 auf, die sich zwischen dem Flansch 14 und dem die Dachöffnung 10 umgebenden festen Dachblech 9 befindet. Der Gegenrahmen 12 liegt in diesem Bereich dem Dachblech 9 von unten mit einem Steg 16 an. Bei der Montage, d.h. bei der festen Verbindung des Einfaßrahmens 11 mit dem Gegenrahmen 12 werden das feste Dachblech 9 und die Dichtung 15 zwischen dem Flansch 14 und dem Steg 16 eingespannt, wodurch die Dachöffnungsränder durch den Rahmen 2 bei gleichzeitiger Abdichtung versteift werden. Im gezeigten Ausführungsbeispiel begrenzen der Steg 16 und ein Halteflansch 17 des Gegenrahmens 12 eine Aufnahmenut 18 für einen Dachhimmel 19.

Bei dem in den Zeichnungen gezeigten Beispiel befinden sich in Vorwärtsfahrtrichtung des Fahrzeugs betrachtet hinter der Dachöffnung 10 aus dem festen Dachblech 9 nach oben herausgedrückte Längsrippen 20. Derartige Längsrippen können sich aber auch zusätzlich oder ausschließlich vor der Dachöffnung 10 und auch seitlich davon befinden. Es liegt auf der Hand, daß bis zur Dachöffnung 10 hin durchgeführte Längsrippen 20 an den Querrändern der Dachöffnung 10 die Anbringung des Rahmens 2 und seine Abdichtung gegenüber dem festen Dachblech 9 schwierig gestalten. Seitlich neben der Dachöffnung 10 ergeben sich dagegen keine Schwierigkeiten, weil sich hier der Dachöffnungsrand in der allgemeinen Ebene bzw. in der Wölbungsfläche des festen Dachblechs 9 befindet, bzw. weil hier bei Vorhandensein von seitlichen Längsrippen die Zwischenräume zwischen den Rippen zur Bildung der seitlichen Dachöffnungsränder herangezogen werden können.

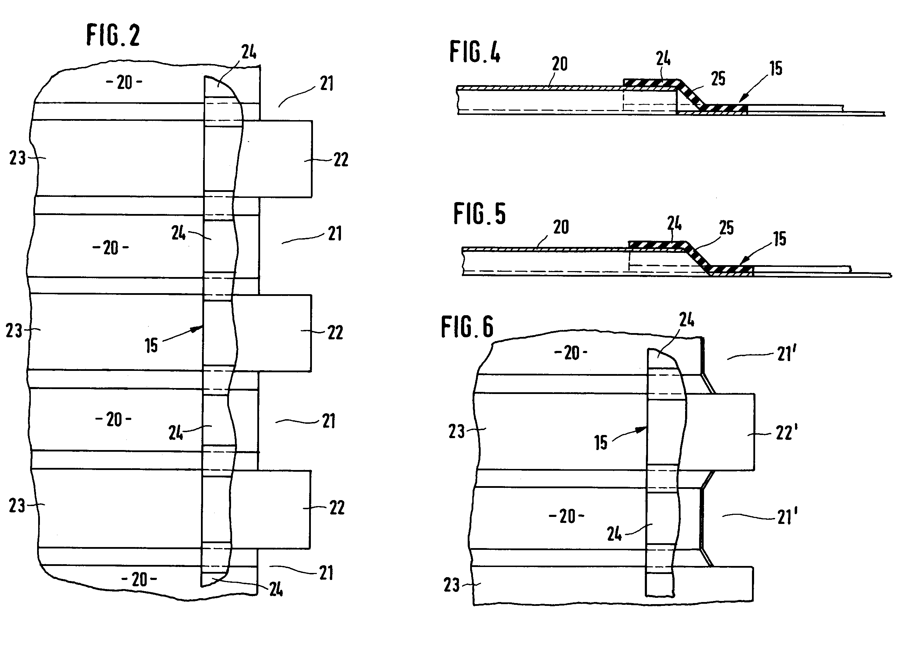

Zur Bildung von ausschließlich in der Ebene bzw. der Wölbungsfläche des festen Dachblechs 9 befindlichen Querrändern der Dachöffnung werden die Längsrippen 20 im Bereich der Querteile des Rahmens 2 unter Bildung von Ausschnitten 21 so ausgeschnitten, daß die Querränder eine gezackte Konfiguration erhalten, wie das beispielsweise in Fig. 2 dargestellt ist. Zur Anbringung der Ausschnitte 21 werden zwei Einschnitte in die Längsrippen 20 vorgenommen, nämlich einerseits parallel zum festen Dachblech 9 und an dessen Oberfläche und andererseits von oben nach unten bis zur Oberfläche des festen Dachblechs 9. Auf diese Weise werden im Eingriffsbereich der Querränder mit dem Rahmen 2 die Längsrippen eliminiert, wobei zwischen den Ausschnitten 21 und damit alternierend bis zur Dachöffnung 10 durchgehende Zungen 22 gebildet werden. Diese Zungen 22 sind aus dem Blechmaterial der zwischen den Längsrippen 20 befindlichen Streifen 23 gebildet, die sich in der Ebene bzw. der Wölbungsfläche des festen Dachblechs 9 befinden.

Die Ausschnitte 21 weisen in Längsrichtung in der Ebene des Dachblechs 9 mindestens eine Tiefenabmessung auf, die der Auflagebreite entspricht, mit welcher der Rahmen 2 die Querränder der Dachöffnung 10 umgreift. Bei der in Fig. 1 gezeigten Anordnung ist die Tiefe der Ausschnitte größer als die Auflagebreite des Flansches 14. Bei dem in den Fig. 1 bis 4 gezeigten Ausführungsbeispiel sind die von oben nach unten durch die Längsrippen 20 geführten Schnitte etwa lotrecht zum festen Dachblech 9 gerichtet. Bei dem Ausführungsbeispiel nach den Fig. 5 und 6 dagegen sind die von oben nach unten durch die Längsrippen 20 geführten Schnitte zur Dachöffnung 10 hin schräg abfallend gerichtet. Dadurch unterscheiden sich die Ausschnitte 21 des ersten Ausführungsbeispiels in der Draufsicht von den Ausschnitten 21' des zweiten Ausführungsbeispiels, wobei jedoch auch beim zweiten Ausführungsbeispiel zwischen den Ausschnitten 21' Zungen 22' zur Befestigung des Rahmens 2 gebildet sind.

Die Dichtung 15 umgibt die Dachöffnung 10 allseitig. Sie kann einteilig ausgeführt sein oder aus vorderen und hinteren Querteilen sowie aus seitlichen Längsteilen bestehen, wobei sich die Anschlußenden jeweils überlappen. Die Breite der Längsteile kann unterschiedlich zu derjenigen der Querteile sein. Die Breite der Dichtung 15 in ihren Querteilen ist jedoch so gewählt, daß die an der Dachöffnung 10 beginnende Dichtung die nach Anbringung der Ausschnitte 21 bzw. 21' verbliebenen Längsrippen 20 in einem zur Erzielung einer vollständigen Abdichtung ausreichenden Ausmaß überdeckt. Im Überdeckungsbereich mit den Längsrippen 20 weist die Dichtung 15 Ausbuchtungen 24 auf, welche die Längsrippen 20 in Querrichtung formschlüssig aufnehmen. Dadurch folgt die Dichtung 15 an den Querrändern der Dachöffnung 10 spaltfrei der Querprofilierung des Dachs, d.h. sie liegt sowohl den Seitenwandungen und der Oberwand der Längsrippen 20 als auch den Oberflächen der dazwischen befindlichen Streifen 23 dicht an. In Längsrichtung gesehen schließen die Ausbuchtungen 24 die stirnseitigen zur Dachöffnung 10 hin gerichteten Öffnungen der Längsrippen 20 durch schräg zur Dachöffnung hin abfallende Wände 25. Die Dichtungen 15 können im Auflagebereich mit allen Blechflächen verklebt sein. Im Bereich der Querränder der Dachöffnung überbrückt die Dichtung 15 die Ausschnitte 21 bzw. 21'. Die aus einem elastomeren Werkstoff gebildete Dichtung 15 kann ausgehend von einem flachen Streifen durch Warmverformung im Bereich der Querränder der Dachöffnung der Kontur des durch die Längsrippen 20 profilierten Dachblechs formschlüssig unter Ausbildung der Ausbuchtungen 24 angepaßt sein. Die Dichtung kann aber auch alternativ im Bereich der Querränder der Dachöffnung der Kontur des durch die Längsrippen 20 profilierten Dachblechs formschlüssig entsprechend vorgefomt sein, wobei die Ausbuchtungen 24 bei Anbringung der Dichtung 15 schon vorhanden sind. Schließlich kann die Dichtung aber auch aus einem elastomeren Werkstoff durch direktes Aufgießen auf die Dachöffnungsränder gebildet sein. In allen Fällen ist sichergestellt, daß die Ausschnitte 21 bzw. 21' und die zur Dachöffnung hin gerichteten stirnseitigen Öffnungen der Längsrippen 20 zuverlässig geschlossen sind.

## Patentansprüche

1. In das feste Dachblech eines Fahrzeugs eingebautes Sonnendach, mit einem an den Rändern einer Dachöffnung (10) befestigten, die Dachöffnung umgebenden und die Dachöffnungsränder umgreifenden mehrteiligen Rahmen (2) und einem bei geschlossenem Sonnendach innerhalb des Rahmens befindlichen und an seinen Rändern gegenüber dem Rahmen abgedichteten Deckel (1), der zur Öffnung des Sonnendachs gegenüber dem Rahmen verlagerbar ist, wobei der mehrteilige Rahmen (2) aus einem von oben in die Dachöffnung (10) eingesetzten Einfaßrahmen (11) und einem unteren Gegenrahmen (12) besteht, welcher unter Zwischenlage der Ränder der Dachöffnung und einer Dichtung (15) mit dem oberen Einfaßrahmen fest verbunden ist, dadurch gekennzeichnet, daß bei einem in Fahrzeuglängsrichtung durch aus dem festen Dachblech (9) nach oben vorspringende und aus dem Dachblech (9) geformte Längsrippen (23) versteiften Dachblech die Längsrippen etwa im Bereich der Querteile des mehrteiligen Rahmens (2) einerseits durch parallel zum festen Dachblech (9) an dessen Oberfläche geführte Schnitte und andererseits durch von oben nach unten bis zur Oberfläche des festen Dachblechs (9) geführte Schnitte unter Erzeugung gezackter Querränder der Dachöffnung (10) ausgeschnitten sind, und daß die Querteile der Dichtung (15) die Ausschnitte (21; 21') und die Ränder der Längsrippen (20) überdecken, wobei die Dichtung (15) in Überdeckungsbereich mit den Längsrippen (20) Ausbuchtungen (24) aufweist, welche die Längsrippen in Querrichtung formschlüssig aufnehmen.

2. Sonnendach nach Anspruch 1, dadurch gekennzeichnet, daß die von oben nach unten durch die Längsrippen (20) geführten Schnitte etwa lotrecht zum festen Dachblech (9) gerichtet sind.

3. Sonnendach nach Anspruch 1, dadurch gekennzeichnet, daß die von oben nach unten durch die Längsrippen (20) geführten Schnitte zur Dachöffnung (10) hin schräg abfallend gerichtet sind.

4. Sonnendach nach einem der Ansprüche 1 bis 3, dadurch gekennzeichnet, daß die Ausschnitte (21; 21') in Längsrichtung in der Ebene des Dachblechs (9) mindestens eine Tiefenabmessung aufweisen, die der Auflagebreite entspricht, mit welcher der Rahmen (2) die Querränder der Dachöffnung (10) umgreift.

5. Sonnendach nach einem der Ansprüche 1 bis 4, dadurch gekennzeichnet, daß die Dichtung (15) aus einem elastomeren Werkstoff gebildet und ausgehend von einem flachen Streifen durch Warmverformung im Bereich der Querränder der Dachöffnung (10) der Kontur des durch die Längsrippen (20) profilierten Dachblechs formschlüssig angepaßt ist.

6. Sonnendach nach einem der Ansprüche 1 bis 4, dadurch gekennzeichnet, daß die Dichtung (15) aus einem elastomeren Werkstoff gebildet und im Bereich der Querränder der Dachöffnung (10) der Kontur des durch die Längsrippen (20) profilierten Dachblechs formschlüssig entsprechend vorgeformt ist.

7. Sonnendach nach einem der Ansprüche 1 bis 4, dadurch gekennzeichnet, daß die Dichtung (15) aus einem elastomeren Werkstoff durch direktes Aufgießen auf die Dachöffnungsränder gebildet ist.
